(19) Europäisches Patentamt
European Patent Office
Office européen des brevets

(11) EP 3 466 902 A1

(12) EUROPEAN PATENT APPLICATION
published in accordance with Art. 153(4) EPC

(43) Date of publication:
10.04.2019 Bulletin 2019/15

(51) Int Cl.:
C04B 35/00 (2006.01)     A01K 61/57 (2017.01)

(21) Application number: 17806650.2

(22) Date of filing: 30.05.2017

(86) International application number:
PCT/JP2017/020011

(87) International publication number:
WO 2017/209096 (07.12.2017 Gazette 2017/49)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 31.05.2016 JP 2016108635

(71) Applicants:
• Shiraishi Central Laboratories Co. Ltd.
Hyogo 660-0085 (JP)
• National University Corporation
Yamagata University
Yamagata-shi, Yamagata 990-8560 (JP)

(72) Inventors:
• UNUMA, Hidero
Yonezawa-shi
Yamagata 992-8510 (JP)
• ITO, Jun
Yonezawa-shi
Yamagata 992-8510 (JP)
• TAJIKA, Masahiko
Amagasaki-shi
Hyogo 660-0085 (JP)

(74) Representative: Ter Meer Steinmeister & Partner
Patentanwälte mbB
Nymphenburger Straße 4
80335 München (DE)

(54) **METHOD FOR PRODUCING CALCIUM CARBONATE SINTERED COMPACT**

(57) Provided is a method for producing a calcium carbonate sintered compact by which sintering can be done at a lower temperature and a higher-density calcium carbonate sintered compact can be produced. A method for producing a calcium carbonate sintered compact includes the steps of: preparing calcium carbonate and a sintering aid that is a mixture of potassium fluoride, lithium fluoride, and sodium fluoride and has a melting point of 600°C or less; compression molding a mixture of the calcium carbonate and the sintering aid mixed to contain the sintering aid in an amount of 0.1 to 3.0% by mass, thus making a green compact; and sintering the green compact to produce a calcium carbonate sintered compact.

**Description**

Technical Field

The present invention relates to methods for producing a calcium carbonate sintered compact.

Background Art

A calcium carbonate sintered compact is expected to be applied to a growth nucleus for an artificial pearl and so on, and various studies have been done on its production method. In conventional methods for producing a calcium carbonate sintered compact, generally, a calcium carbonate sintered compact is produced by isostatically pressing a mixture of calcium carbonate and a sintering aid into a green compact and sintering this green compact in a carbon dioxide atmosphere (see Patent Literature 1 and Non-Patent Literature 1).

In conventional techniques, at least two of lithium carbonate, sodium carbonate, and potassium carbonate are generally used as a sintering aid. In Patent Literature 1 and Non-Patent Literature 1, a mixture of lithium carbonate, sodium carbonate, and potassium carbonate is used as a sintering aid. Citation List

Patent Literature

Patent Literature 1: JP-A-2007-254250

Non-Patent Literature

Non-Patent Literature 1: Satoko Tomatsuri et al., "Tansan Karushiumu no Shoketsu niokeru Shuppatsu Busshitsu no Eikyo", Proceedings for the Academic Conference of the Society of Inorganic Materials, Japan, Vol. 105th, p. 46-47 (November 14, 2002)

Summary of Invention

Technical Problem

In the production of a calcium carbonate sintered compact, a method is desired which enables sintering at a lower temperature and can produce a calcium carbonate sintered compact having a higher density.

An object of the present invention is to provide a method for producing a calcium carbonate sintered compact by which sintering can be done at a lower temperature and a higher-density calcium carbonate sintered compact can be produced.

Solution to Problem

A method for producing a calcium carbonate sintered compact according to the present invention includes the steps of: preparing calcium carbonate and a sintering aid that is a mixture of potassium fluoride, lithium fluoride, and sodium fluoride and has a melting point of 600°C or less; compression molding a mixture of the calcium carbonate and the sintering aid mixed to contain the sintering aid in an amount of 0.1 to 3.0% by mass, thus making a green compact; and sintering the green compact to produce a calcium carbonate sintered compact.

In the present invention, the green compact is preferably sintered at 380 to 600°C.

In the present invention, the compression molding is preferably uniaxial molding.

In the present invention, the green compact is preferably sintered in air.

In the present invention, the calcium carbonate preferably has a purity of 99% by mass or more.

In the present invention, the calcium carbonate preferably has an average particle diameter ($D_{50}$) in a range of 0.05 to 0.30 $\mu$m in a particle diameter distribution measured by transmission electron microscope observation, a 90% particle diameter ($D_{90}$) of 3 $\mu$m or less in a particle diameter distribution measured by a laser diffraction particle size distribution measurement method, and a BET specific surface area of 5 to 25 $m^2$/g.

In the present invention, the calcium carbonate sintered compact preferably has a relative density of 95% or more. Advantageous Effects of Invention

The present invention enables production of a calcium carbonate sintered compact that can be sintered from a green compact at a lower temperature and has a higher density. Description of Embodiments

Hereinafter, a description will be given of a preferred embodiment. However, the following embodiment is merely illustrative and the present invention is not limited to the following embodiment.

(Calcium Carbonate)

No particular limitation is placed on the type of calcium carbonate for use in the present invention so long as it can be used for production of a calcium carbonate sintered compact. From the viewpoint of enabling the making of a high-density green compact, the preferred calcium carbonate is one having an average particle diameter ($D_{50}$) in a range of 0.05 to 0.30 $\mu$m in a particle diameter distribution measured by transmission electron microscope observation, a 90% particle diameter ($D_{90}$) of 3 $\mu$m or less in a particle diameter distribution measured by the laser diffraction particle size distribution measurement method, and a BET specific surface area of 5 to 25 m$^2$/g.

The average particle diameter ($D_{50}$) in the particle diameter distribution measured by transmission electron microscope observation is preferably in a range of 0.05 to 0.30 $\mu$m, more preferably in a range of 0.08 to 0.25 $\mu$m, and still more preferably in a range of 0.10 to 0.20 $\mu$m. When the average particle diameter ($D_{50}$) is in the above range, a high-density green compact can be made, so that a high-density calcium carbonate sintered compact can be produced. The particle diameter distribution by transmission electron microscope observation can be determined by measuring 1000 or more particles of calcium carbonate, which is an object to be measured, by transmission electron microscope observation.

The 90% particle diameter ($D_{90}$) in the particle diameter distribution measured by the laser diffraction particle size distribution measurement method is preferably 3 $\mu$m or less, more preferably 2.5 $\mu$m or less, and still more preferably 2.0 $\mu$m or less. By determining a particle diameter distribution by the laser diffraction particle size distribution measurement method, the particle diameter distribution of agglomerates of calcium carbonate can be determined. Calcium carbonate having an average particle diameter ($D_{50}$) in the above range in a particle diameter distribution measured by transmission electron microscope observation and a 90% particle diameter ($D_{90}$) in the above range in a particle diameter distribution measured by the laser diffraction particle size distribution measurement method has a sharp particle diameter distribution and excellent powder packability during molding. Therefore, a high-density green compact can be made, so that a high-density calcium carbonate sintered compact can be produced.

Furthermore, in the present invention, the ratio ($D_{90}/D_{10}$) of 90% particle diameter ($D_{90}$) to 10% particle diameter ($D_{10}$) in the particle diameter distribution measured by transmission electron microscope observation is preferably 2.3 or less, more preferably 2.2 or less, and still more preferably 2.1 or less. When $D_{90}/D_{10}$ is in the above range, the particle diameter distribution is sharper and the densities of the green compact and the calcium carbonate sintered compact can be further increased.

Calcium carbonate for use in the present invention can be produced, for example, by a commonly well-known carbon dioxide synthesis method of blowing carbon dioxide into lime milk to react them with each other. In particular, particles having an average particle diameter ($D_{50}$) of over 0.1 $\mu$m can be produced according to the production method described in Japanese Patent No. 0995926.

The BET specific surface area of calcium carbonate for use in the present invention is preferably 5 to 25 m$^2$/g, more preferably 7 to 20 m$^2$/g, and still more preferably 8 to 15 m$^2$/g. When the BET specific surface area is in the above range, the sinterability of calcium carbonate can be increased. Thus, a high-density calcium carbonate sintered compact can be produced.

The purity of calcium carbonate for use in the present invention is preferably 99.0% by mass or more, more preferably 99.5% by mass or more, and still more preferably 99.7% by mass or more.

(Sintering Aid)

The sintering aid for use in the present invention is a sintering aid being a mixture of calcium carbonate, potassium fluoride, lithium fluoride, and sodium fluoride and having a melting point of 600°C or less. The melting point of the sintering aid is preferably 550°C or less, and more preferably in a range of 400 to 500°C. Within the above range, a calcium carbonate green compact can be fired at a lower temperature and a higher-density calcium carbonate sintered compact can be produced. Because in the sintering the sintering aid is used by addition to calcium carbonate, its actual melting point becomes lower than the above temperature and, therefore, it sufficiently acts as a sintering aid. The melting point of the sintering aid can be determined by differential thermal analysis (DTA).

The sintering aid is preferably a mixture having a composition range of 10 to 60% by mole potassium fluoride, 30 to 60% by mole lithium fluoride, and 0 to 30% by mole sodium fluoride. Within the above range, a calcium carbonate green compact can be fired at a lower temperature and a higher-density calcium carbonate sintered compact can be produced.

(Mixture of Calcium Carbonate and Sintering Aid)

In the present invention, a mixture is prepared by mixing calcium carbonate with the sintering aid so that the content of the sintering aid is 0.1 to 3.0% by mass. The content of the sintering aid is preferably 0.2 to 2.5% by mass and more preferably 0.3 to 2.0% by mass. If the content of the sintering aid in the mixture is too small, calcium carbonate may not sufficiently be sintered. If the content of the sintering aid is too large, the density of the calcium carbonate sintered compact may not be able to be increased.

(Green Compact)

In the present invention, a green compact is made by compression molding the above mixture. The compression molding is preferably uniaxial molding. According to the present invention, using a green compact made by uniaxial molding, a calcium carbonate sintered compact having a high density can be produced. However, in the present invention, the compression molding is not limited to uniaxial molding and a green compact may be made by any other known molding method, such as isostatic pressing, doctor blade molding or casting.

In the present invention, the relative density of the green compact is preferably 50% or more, more preferably 55% or more, and still more preferably 58% or more. The relative density of the green compact is a value obtained by dividing the bulk density of the green compact by the theoretical density (2.711 g/cm$^3$) of calcium carbonate. The bulk density of the green compact can be measured by the Archimedes's method to be described later. The relative density of the green compact is preferably that obtained when the mixture is uniaxially pressed at a molding pressure of 196.1 Mpa (2000 kgf/cm$^2$). Within the above range of relative densities, a higher-density calcium carbonate sintered compact can be obtained.

(Production of Calcium Carbonate Sintered Compact)

In the present invention, a calcium carbonate sintered compact can be produced by sintering the above green compact. From the viewpoint of sintering in a simpler process, the atmosphere during the sintering is preferably in air. However, the present invention is not limited to this and the green compact may be sintered, as with the conventional techniques, in a carbon dioxide atmosphere or in an atmosphere of inert gas, such as nitrogen gas. According to the present invention, even by sintering in air, a calcium carbonate sintered compact having a high density can be produced.

If the firing temperature is too low, calcium carbonate may not sufficiently be sintered. If the firing temperature is too high, calcium carbonate is likely to decompose to generate calcium oxide, which is undesirable. The firing temperature is preferably in a range of 380 to 600°C, more preferable in a range of 390 to 580°C, and still more preferably 400 to 560°C.

The relative density of the calcium carbonate sintered compact is preferably 95% or more, more preferably 96% or more, still more preferably 97% or more, yet still more preferably 98% or more, and particularly preferably 99% or more.

Examples

Hereinafter, a description will be given of specific examples according to the present invention, but the present invention is not limited to the following examples.

<Production of Calcium Carbonate>

A plurality types of calcium carbonate having respective particle diameter distributions and BET specific surface areas shown in Tables 1 and 2 were produced. Particles having an average particle diameter ($D_{50}$) of over 0.1 $\mu$m were produced according to the production method described in Japanese Patent No. 0995926. Other types of particles were produced by the common carbon dioxide synthesis method of blowing carbon dioxide into lime milk to react them with each other. Note that in Examples 1 to 3 and Comparative Examples 1 to 4 shown in Table 1 the same type of calcium carbonate was used.

<Measurement of Particle Diameter by Transmission Electron Microscope Observation>

Each type of obtained calcium carbonate was measured in terms of particle diameter distribution by transmission electron microscope observation. In relation to particles of each type of calcium carbonate as an object to be measured, the particle diameters of 1500 particles were measured and the average particle diameter ($D_{50}$), $D_{90}$, and $D_{10}$ were determined from the resultant particle diameter distribution. The respective average particle diameters ($D_{50}$), $D_{90}$s, $D_{10}$s, and values of $D_{90}/D_{10}$ of the plurality of types of calcium carbonate are shown in Tables 1 and 2.

<Measurement of Particle Diameter by Laser Diffraction Particle Size Distribution Measurement Method>

Each type of obtained calcium carbonate was measured in terms of particle diameter distribution by the laser diffraction particle size distribution measurement method. Its specific measurement method was conducted as follows. A laser diffraction particle size distribution measurement device SALDA-2000J manufactured by Shimadzu Corporation was used as a measurement device. An amount of 1 g of sample was added into 100 mL of 0.2% sodium hexametaphosphate solution, the mixture was then loaded into a sampler, and the mixture after reaching a specified light absorbance was measured in terms of particle diameter distribution while being irradiated with ultrasonic waves for one minute. The 90% particle diameter ($D_{90}$) was determined from the measured particle diameter distribution. The determined 90% particle diameters are shown in Tables 1 and 2.

<Measurement of BET Specific Surface Area>

Each type of obtained calcium carbonate was measured in terms of BET specific surface area. The results are shown in Tables 1 and 2.
The plurality types of obtained calcium carbonate were also measured in terms of purity. All of them had a purity of 99.8%.

<Sintering Aid>

In each of Examples, a fluoride sintering aid was used. A mixture of potassium fluoride, lithium fluoride, and sodium fluoride was used as the fluoride sintering aid. The mixing ratio was, in molar ratio, potassium fluoride to lithium fluoride to sodium fluoride = 40:49:11. The melting point (eutectic temperature) of the mixture was 463°C.
In each of Comparative Examples, a carbonate sintering aid was used. A mixture of potassium carbonate and lithium carbonate was used as the carbonate sintering aid. The mixing ratio was, in molar ratio, potassium carbonate to lithium carbonate = 38:62. The melting point (eutectic temperature) of the mixture was 488°C.

<Making of Green Compact>

The sintering aid and calcium carbonate were mixed so that the content of the sintering aid was each amount shown in Tables 1 and 2. This mixture was put into a polyethylene bottle containing a suitable amount of zirconia balls and dry mixed overnight to obtain a raw material powder. This raw material powder was put into a cylindrical mold and uniaxially pressed using a press . The raw material powder was preliminarily pressed at a molding pressure of 98 Mpa (1000 kgf/cm$^2$) for one minute and then pressed at a molding pressure of 196.1 Mpa (2000 kgf/cm$^2$) for one minute.

<Firing of Green Compact>

The obtained green compacts were fired at respective firing temperatures shown in Tables 1 and 2 in air for three hours. Note that until the firing temperature was reached, the temperature was increased at a rate of 10°C per minute. By the firing, respective calcium carbonate sintered compacts were obtained.

<Measurement of Densities of Green Compact and Sintered Compact>

The bulk densities $\rho_b$ [g/cm$^3$] of each green compact and sintered compact were obtained by the Archimedes's method and each of the obtained bulk densities was divided by the theoretical density (2.711 g/cm$^3$) of calcium carbonate to obtain their respective relative densities. The bulk densities of each green compact and sintered compact were obtained as follows. First, the dry weight $W_1$ of a sample of the green compact or the sintered compact was measured, the sample was allowed to stand for about 10 minutes in paraffin warmed in a vessel put in hot water, then picked up, and cooled to ordinary temperature. After the cooling, the weight $W_2$ of the sample containing paraffin was measured. Thereafter, the weight $W_3$ of the sample in water was measured and the bulk density $\rho_b$ of the sample was then determined from the following equation.

$$\text{Bulk Density } \rho_b \text{ [g/cm}^3] = W_1\rho_W/(W_2 - W_3)$$

$\rho_W$: water density [g/cm$^3$]
$W_1$: dry weight [g] of sample

$W_2$: weight [g] of sample containing paraffin

$W_3$: weight [g] of sample in water

The respective bulk densities and relative densities of the green compacts and the sintered compacts are shown in Tables 1 and 2.

(Effects of Sintering Aid: Examples 1-3 and Comparative Examples 1-4)

[Table 1]

| | Calcium Carbonate | | | | | | Green Compact | | Sintering Aid | | Firing Temperature | CaCO<sub>3</sub> Sintered Compact | |
|---|---|---|---|---|---|---|---|---|---|---|---|---|---|
| | Particle Diameter by Laser Diffraction PSD Measurement | Particle Diameter by Electron Microscope Observation | | | | BET Specific Surface Area | Bulk Density | Relative Density | Type | Content | Firing Temperature | Bulk Density | Relative Density |
| | $D_{90}(\mu m)$ | $D_{90}$ ($\mu$m) | $D_{50}$ ($\mu$m) | $D_{10}$ ($\mu$m) | $D_{90}/D_{10}$ | ($m^2$/g) | (g/$cm^3$) | (%) | | (% by mass) | (°C) | (g/$cm^3$) | (%) |
| Ex. 1 | 2.1 | 0.19 | 0.15 | 0.09 | 2.1 | 12.7 | 1.68 | 62.0 | fluoride | 1.2 | 420 | 2.66 | 98.1 |
| Comp.Ex. 1 | 2.1 | 0.19 | 0.15 | 0.09 | 2.1 | 12.7 | 1.68 | 62.0 | carbonate | 1.2 | 420 | 1.90 | 70.0 |
| Comp. Ex. 2 | 2.1 | 0.19 | 0.15 | 0.09 | 2.1 | 12.7 | 1.68 | 62.0 | carbonate | 1.2 | 480 | 2.63 | 97.0 |
| Ex.2 | 2.1 | 0.19 | 0.15 | 0.09 | 2.1 | 12.7 | 1.65 | 60.9 | fluoride | 0.6 | 450 | 2.69 | 99.2 |
| Comp. Ex. 3 | 2.1 | 0.19 | 0.15 | 0.09 | 2.1 | 12.7 | 1.65 | 60.9 | carbonate | 0.6 | 450 | 1.76 | 64.9 |
| Ex.3 | 2.1 | 0.19 | 0.15 | 0.09 | 2.1 | 12.7 | 1.65 | 60.9 | fluoride | 0.3 | 510 | 2.66 | 98.1 |
| Comp. Ex. 4 | 2.1 | 0.19 | 0.15 | 0.09 | 2.1 | 12.7 | 1.65 | 60.9 | carbonate | 0.3 | 510 | 1.71 | 63.1 |

A fluoride sintering aid was used in Examples 1 to 3 and a carbonate sintering aid was used in Comparative Examples 1 to 4. As shown in Table 1, Examples 1 to 3 where the fluoride sintering aid was used provided higher-density calcium carbonate sintered compacts as compared to Comparative Examples 1, 3 and 4 where the carbonate sintering aid was used. Furthermore, as is obvious from the comparison between Example 1 and Comparative Example 2, it can be seen that in producing a calcium carbonate sintered compact having a comparable density, firing can be conducted at a low temperature with the use of a fluoride sintering aid.

(Effects of Particle Diameter Distribution of Calcium Carbonate: Examples 2 and 4-8)

[Table 2]

| | Calcium Carbonate | | | | | | Green Compact | | Sintering Aid | | Firing Temperature | CaCO$_3$ Sintered Compact | |
|---|---|---|---|---|---|---|---|---|---|---|---|---|---|
| | Particle Diameter by Laser Diffraction PSD Measurement | Particle Diameter by Electron Microscope Observation | | | | BET Specific Surface Area | Bulk Density | Relative Density | Type | Content | | Bulk Density | Relative Density |
| | $D_{90}$ ($\mu$m) | $D_{90}$ ($\mu$m) | $D_{50}$ ($\mu$m) | $D_{10}$ ($\mu$m) | $D_{90}/D_{10}$ | (m$^2$/g) | (g/cm$^3$) | (%) | | (%bymass) | (°C) | (g/cm$^3$) | (%) |
| Ex. 4 | 1.9 | 0.18 | 0.12 | 0.09 | 2.0 | 15.0 | 1.68 | 62.0 | fluoride | 0.6 | 450 | 2.67 | 98.5 |
| Ex. 2 | 2.1 | 0.19 | 0.15 | 0.09 | 2.1 | 12.7 | 1.65 | 60.9 | fluoride | 0.6 | 450 | 2.69 | 99.2 |
| Ex. 5 | 2.3 | 0.25 | 0.20 | 0.13 | 1.9 | 8.5 | 1.73 | 63.8 | fluoride | 0.6 | 450 | 2.68 | 98.9 |
| Ex. 6 | 8.5 | 0.07 | 0.04 | 0.02 | 3.5 | 35.0 | 1.23 | 45.4 | fluoride | 0.6 | 450 | 2.30 | 84.8 |
| Ex. 7 | 4.1 | 0.40 | 0.32 | 0.15 | 2.7 | 5.5 | 1.44 | 53.1 | fluoride | 0.6 | 450 | 2.45 | 90.4 |
| Ex. 8 | 5.5 | 0.23 | 0.15 | 0.10 | 2.3 | 12.5 | 1.49 | 55.0 | fluoride | 0.6 | 450 | 2.53 | 93.3 |

As shown in Table 2, calcium carbonate used in Examples 2, 4, and 5 was calcium carbonate having an average particle diameter ($D_{50}$) in a range of 0.05 to 0.30 $\mu$m in a particle diameter distribution measured by transmission electron microscope observation and a 90% particle diameter ($D_{90}$) of 3 $\mu$m or less in a particle diameter distribution measured by the laser diffraction particle size distribution measurement method. Thus, even without using isostatic pressing, high-density green compacts and high-density calcium carbonate sintered compacts were obtained.

**Claims**

1.  A method for producing a calcium carbonate sintered compact, the method comprising the steps of:

    preparing calcium carbonate and a sintering aid that is a mixture of potassium fluoride, lithium fluoride, and sodium fluoride and has a melting point of 600°C or less;
    compression molding a mixture of the calcium carbonate and the sintering aid mixed to contain the sintering aid in an amount of 0.1 to 3.0% by mass, thus making a green compact; and
    sintering the green compact to produce a calcium carbonate sintered compact.

2.  The method for producing a calcium carbonate sintered compact according to claim 1, wherein the green compact is sintered at 380 to 600°C.

3.  The method for producing a calcium carbonate sintered compact according to claim 1 or 2, wherein the compression molding is uniaxial molding.

4.  The method for producing a calcium carbonate sintered compact according to any one of claims 1 to 3, wherein the green compact is sintered in air.

5.  The method for producing a calcium carbonate sintered compact according to any one of claims 1 to 4, wherein the calcium carbonate has a purity of 99% by mass or more.

6.  The method for producing a calcium carbonate sintered compact according to any one of claims 1 to 5, wherein the calcium carbonate has an average particle diameter ($D_{50}$) in a range of 0.05 to 0.30 $\mu$m in a particle diameter distribution measured by transmission electron microscope observation, a 90% particle diameter ($D_{90}$) of 3 $\mu$m or less in a particle diameter distribution measured by a laser diffraction particle size distribution measurement method, and a BET specific surface area of 5 to 25 $m^2$/g.

7.  The method for producing a calcium carbonate sintered compact according to any one of claims 1 to 6, wherein the calcium carbonate sintered compact has a relative density of 95% or more.

## INTERNATIONAL SEARCH REPORT

| International application No. |
| --- |
| PCT/JP2017/020011 |

| A. CLASSIFICATION OF SUBJECT MATTER |
| --- |
| *C04B35/00*(2006.01)i, *A01K61/57*(2017.01)i |

According to International Patent Classification (IPC) or to both national classification and IPC

| B. FIELDS SEARCHED |
| --- |
| Minimum documentation searched (classification system followed by classification symbols)<br>C04B35/00-35/22, C04B35/622-35/84, A01K61/57 |

| Documentation searched other than minimum documentation to the extent that such documents are included in the fields searched |
| --- |
| Jitsuyo Shinan Koho        1922–1996   Jitsuyo Shinan Toroku Koho   1996–2017<br>Kokai Jitsuyo Shinan Koho   1971–2017   Toroku Jitsuyo Shinan Koho   1994–2017 |

| Electronic data base consulted during the international search (name of data base and, where practicable, search terms used) |
| --- |
| JSTPlus/JSTChina/JST7580(JDreamIII) |

### C. DOCUMENTS CONSIDERED TO BE RELEVANT

| Category* | Citation of document, with indication, where appropriate, of the relevant passages | Relevant to claim No. |
| --- | --- | --- |
| Y | JP 2007-254240 A (Yoshizawa Lime Industry Co., Ltd.),<br>04 October 2007 (04.10.2007),<br>claim 1<br>(Family: none) | 1-7 |
| Y | JP 2007-063085 A (Shoji SEIKE),<br>15 March 2007 (15.03.2007),<br>claim 1; paragraph [0007]<br>(Family: none) | 1-7 |
| Y | Yutaka HASHIZUKA, "Sintering of Calcium Carbonate", Kagawa Prefectural Industrial Technology Center Kenkyu Hokoku, 1998.05, no.5, pages 1 to 4 | 1-7 |

| ☒ | Further documents are listed in the continuation of Box C. | ☐ | See patent family annex. |
| --- | --- | --- | --- |

| * | Special categories of cited documents: |
| --- | --- |
| "A" | document defining the general state of the art which is not considered    to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 18 July 2017 (18.07.17) | 01 August 2017 (01.08.17) |

| Name and mailing address of the ISA/<br>Japan Patent Office<br>3-4-3,Kasumigaseki,Chiyoda-ku,<br>Tokyo 100-8915,Japan | Authorized officer<br><br><br>Telephone No. |
| --- | --- |

Form PCT/ISA/210 (second sheet) (January 2015)

**INTERNATIONAL SEARCH REPORT**

International application No.

PCT/JP2017/020011

C (Continuation). DOCUMENTS CONSIDERED TO BE RELEVANT

| Category* | Citation of document, with indication, where appropriate, of the relevant passages | Relevant to claim No. |
|---|---|---|
| Y | JP 7-242415 A (Inax Corp.), 19 September 1995 (19.09.1995), claims 1, 4; paragraph [0017] & DE 19507309 A1 & NL 9500371 A | 1-7 |
| Y | JP 6-087649 A (Toshiba Tungaloy Co., Ltd.), 29 March 1994 (29.03.1994), paragraphs [0016], [0017] (Family: none) | 1-7 |
| Y | JP 62-007664 A (Shinagawa Refractories Co., Ltd.), 14 January 1987 (14.01.1987), page 2, lower right column, line 3 to page 3, upper right column, line 3 (Family: none) | 1-7 |
| Y | BENEŠ, O., KONINGS, R. J. M., Thermodynamic properties and phase diagrams of fluoride salts for nuclear applications, Journal of Fluorine Chemistry, 2009, Vol.130, Issue 1, PP.22-29, ISSN 0022-1139, DOI:10.1016/j.jfluchem.2008. 07.014 | 1-7 |
| A | JP 10-226566 A (Shin-Etsu Chemical Co., Ltd.), 25 August 1998 (25.08.1998), claims (Family: none) | 1-7 |

Form PCT/ISA/210 (continuation of second sheet) (January 2015)

**EP 3 466 902 A1**

**Patent documents cited in the description**

- JP 2007254250 A

- JP 0995926 A

**Non-patent literature cited in the description**

- **SATOKO TOMATSURI et al.** Tansan Karushiumu no Shoketsu niokeru Shuppatsu Busshitsu no Eikyo. *Proceedings for the Academic Conference of the Society of Inorganic Materials,* 14 November 2002, vol. 105th, 46-47